# EUROPEAN PATENT SPECIFICATION

(11) **EP 1 656 196 B1**
(45) Date of publication and mention of the grant of the patent: **23.09.2009**
(21) Application number: 04763231.0
(22) Date of filing: 15.07.2004
(51) Int. Cl.: B01D 63/02, B01D 65/00

(54) **FILTERING DEVICE**
FILTERVORRICHTUNG
DISPOSITIF DE FILTRATION

(30) Priority: 25.08.2003 DE 10340145
(43) Date of publication of application: 17.05.2006
(60) Divisional application: 08019480.6
(73) Proprietor: PALL CORPORATION, Port Washington, NY 11050 (US)
(72) Inventor: STROHM, Gerhard, 55278 Dexheim (DE); SCHNIEDER, Georg, 55546 Bad Kreuznach (DE); KAUL, Wilfried, 55595 Weinsheim (DE); ROHR, Reinhold, 55413 Weiler (DE)
(74) Representative: Hoeger, Stellrecht & Partner Patentanwälte
(86) International application number: PCT/EP2004/007829
(87) International publication number: WO 2005/018783

(56) References cited:
- DE-A- 3 127 282
- DE-A- 4 036 978
- DE-A- 19 900 432
- US-A- 4 400 276
- US-A- 5 211 728

## Description

The invention relates to a filtering device comprising a filter housing having at least one non-filtrate inlet and at least one filtrate outlet, a replaceable filter cartridge inserted in said filter housing and containing at least one filter element, particularly a bundle of capillary or hollow fiber membranes, which are fixed at both ends of the cartridge In end pieces, wherein the filter element fixed In said end pieces defines a flow path for a fluid extending from one end of the cartridge to the other; and at least one retaining device for supporting the filter cartridge in the filter housing which indirectly or directly bears against the filter housing in the axial direction.

The filter housing is regularly comprised of a filter cartridge housing having first and second open ends and a detachable filter head at each open end.

The at least one non-filtrate inlet is often provided on the filter head, whereas the at least one filtrate outlet is arranged on the filter cartridge housing. Alternatively, the non-filtrate inlet and the filtrate outlet may be interchanged so that the filtrate outlet may be interchanged so that the filtrate outlet is disposed on the filter head and the non-flltrate inlet on the filter cartridge housing. The assignment of the connections as filtrate inlet or non-filtrate outlet depends on the mode of operation of the filtering device.

The filter element may comprise a plurality of tubular, capillary, or hollow fiber membranes. Furthermore the filter element may comprise flat tubular filter media disposed parallel to the longitudinal axis of the cartridge, such as filter membranes or woven or non-woven filter fabrics or filter membranes wound spirally around the longitudinal axis of the filter cartridge, In the case of a flat tubular filter element or a flat tubular spirally wound filter element, the membrane walls of the filter element are separated from each other by a spacer forming a non-filtrate chamber or a filtrate chamber, depending on the direction of flow through the filtering device. The filter elements are embedded with their end portions in a casting material in such a manner that their end portion is open to the non-filtrate chamber or filtrate chamber, respectively.

US patent 5,211,728 discloses a filtering device including replaceable filter cartridge having a hollow fiber membrane bundle fixed in end pieces, said end pieces being connected to end caps providing fluid connection ports. The connection of the end pieces to the end caps is accomplished by clamshell retainer means tightly engaging the end pieces and the end caps. The filter cartridge and the end caps are accommodated in a housing. The end caps are fixed on the housing.

DE 31 27 282 discloses a filtering device comprising a housing and a hollow fiber filter cartridge. The filter cartridge accommodates the hollow fibers in end pieces made of a potting material. The end pieces are fixed in position within the housing either directly via a locking ring or via intermediate sleeves and fixing bolts. In case where axial expansion of the filter cartridge is desired only one end piece is fixed onto the housing.

DE 39 16 511 A1 discloses a filtering device in which the bundle of capillary or hollow fiber membranes is embedded at both ends in end pieces made of a casting material or sealing compound, which are in turn fixed to an inner collar or a retaining ring of the filter housing. The pressures occurring during filtration and acting on the bundle are absorbed by this inner collar. The end pieces project beyond the filter cartridge housing and sealing is effected within the filter head by means of O-rings. The fitter head possesses a non-filtrate inlet and a filtrate outlet, which makes it necessary for the inner collar, which is connected to the the filter cartridge housing via fins, to be surrounded by the filtrate, which flows back into the filter head. This leads to contamination, which must be avoided.

This known filtering device further suffers from the drawback that the filter cartridge is immoveably attached to the cartridge housing. This means that following exhaustion of the capillary or hollow fiber membranes either these capillary or hollow fiber membranes must be disposed of together with the housing or, alternatively, that the capillary and hollow fiber membranes must be removed from the housing by elaborate means.

Filter modules allowing for separation of the actual filter element from the cartridge housing are sold and described in various forms. These modules always have slide-in cartridges, which can be removed from the housing.

One known first variant provides for the end pieces made of casting material of the slide-in cartridge to be fitted in its own housing comprising two terminating elements, which surround the casting material, and a middle portion, which, for example, is a perforated tube or consists of retaining bars. Sealing is effected between the end pieces and said terminating elements by an adhesive joint.

Compensation of the compressive forces is effected by transfer of the forces from the end pieces to the terminating elements. The main object of the middle portion is to prevent the slide-in cartridge from collapsing. On the other hand, the middle portion also serves as protection for the capillaries during transfer, installation, and filtration.

A similar embodiment is disclosed in DE 44 01 014 A1. This device consists substantially of a tubular housing, of which both ends are closed by caps. In the housing itself there is formed an interior chamber, in which a membranous element is removably installed. This membranous element, which corresponds to the slide-in cartridge, consists substantially of a plurality of hollow fiber membranes, which surround a grating tube, which is provided with openings over its entire surface and length. Both ends of the filter cartridge have a closing member, which consists of a sealing compound, in which the hollow fiber membranes are embedded.

A drawback of this embodiment is the high expenditure involved in the production of the slide-in cartridges. Since the pressure-resistant slide-in cartridge must be completely renewed at each replacement operation, high costs are caused by the fact that the independent housing of the slide-in cartridge must also be disposed of as waste material and then recycled by elaborate means. Furthermore, the weight is unnecessarily increased by the presence of the additional housing.

A second embodiment of a slide-in cartridge provides for the end pieces of casting material or sealing compound to be bounded into a ring, which transmits the forces occurring during filtration directly to the housing via another divided ring. The slide-in cartridge has no middle portion and is thus cheap compared with the previously described embodiment. In this embodiment also, an adhesive joint involving associated drawbacks is present. In particular, temperature changes and different coefficients of linear expansion can weaken this adhesive joint so that there is no guarantee that a good seal will prevail between the end pieces and the ring. There is no guaranteed transmission of the forces from the end pieces to the ring, which can ultimately cause the slide-in cartridge to collapse.

In a third embodiment, substantially corresponding to the first variant having an independent cartridge housing, no adhesive joint is provided, but instead the elements are jammed by means of an axial sealing ring between the slide-in cartridge and the closing cap of the filter housing. In this case the elaborate design of the slide-in cartridge is a drawback, for the independent housing for the slide-in cartridge must absorb all forces. Between the sealing compound and the terminating element of the housing there is formed a slit which is open toward the filtrate side and can thus form a source of contamination.

WO 00/67885 discloses another filtering device, into which a filter cartridge is inserted, which has, at its cartridge ends, an end piece made of a sealing compound having a cylindrical external surface. The end piece projects radially beyond the bundle of capillary fibers so that the sealing compound can be supported either on a projection of the housing or on a divided retaining ring. This engagement of the end piece from below requires a specific housing design, in order to create a supporting projection. Where a divided retaining ring is provided, there is present a considerable projection of sealing compound, which calls for an appropriately large chamber. The divided retaining ring cannot be sealed off by sealing elements so that contamination of the filtrate can take place in this region.

The end piece made of a sealing compound has a groove for the accommodation of an O-ring, but this merely involves a sealing but not a retaining function. In order to produce such an outer contour, considerable expenditure is necessary, since, on account of the sealing function, high demands on the precision of the groove must be satisfied, which, when use is made of, say, a split mold, further polishing of the sealing compound would have to be necessary. Such a groove can only be used for filters satisfying low demands. In this known arrangement twisting of the filter cartridge is not effectively prevented, and this can be the cause of damage to the filter elements.

DE 39 27 455 C1 discloses a filter module for enrichment or impoverishment and also for filtration with the aid of a semipermeable membrane, which comprises, in a filter housing, a replaceable cartridge, in the end regions of which capillaries are held in cast epoxy resin parts so as to fix them non-displaceable and fluid-tight. These cast parts are engaged by a pair of O-rings on their external surfaces for effecting a seal. In between each pair of O-rings, a clamping ring abuts the circumferential surface of the cast parts for fixing the cartridge in the filter housing.

The clamping rings are sealed off by the O-rings so that no contamination of the filtrate can occur at this point. The clamping ring is of metal, while the sealing compound is made of a plastics material. Obviously the two materials have different coefficients of thermal expansion. With this type of attachment by means of a clamping ring on a smooth external surface of the sealing compound, these different coefficients of thermal expansion can be the cause of the sealing compound, and thus the slide-in cartridge, slipping out of the holder when pressure is exerted, ie during operation of the filtering device, so that there is no guarantee for a good seal at said points. In the specification this reference proposes to reduce the thermal expansion by the addition of fillers to the sealing compound, which however has the drawback that these fillers can impair the strength properties and, depending on the use to which the filter is put, possibly have a negative influence on the safety thereof in food, particularly in the case of beverage filtration. Furthermore, if the clamping force is increased to make the cartridge stay in place, deformation of the end regions may occur which may affect the flow characteristic in fluid channels near the surface.

Starting from DE 39 27 455 C1, the object of the invention is to provide a filtering device in which the filter cartridge is held in the housing in a simple manner without strains or leaks occurring by reason of temperature fluctuations.

This object is achieved by a filtering device according to the features of claim 1
wherein the end pieces are made of a casting material in which end portions of the filter element are embedded, wherein the outer surface of the end pieces formed of the casting material comprises a retaining structure being located at a portion of the end pieces which is sealed against a volume of the filter housing which is in fluid connection with the non-filtrate inlet and which is further sealed against a volume of the filter housing which is in fluid connection with the filtrate outlet by a first and a second sealing element, respectively. The casting material of the end pieces sealingly engages the filter element at its end portions.

According to the present invention, the retaining device and the retaining structure are designed to interengage slackly to thereby allow a movement of the filter cartridge relative to the filter housing in the radial and/or axial direction thereof.

The filter element may comprise a plurality of capillary or hollow fibre membranes. Alternately, the filter element may comprise one or more flat tubular membranes optionally spirally wound around the longitudinal axis of the filter cartridge.

In order to provide a well defined flow path from one end piece to the other the flat tubular membranes comprise a spacer sheet which holds the membrane walls apart from each other.

The retaining structure is preferably integrally formed in the peripheral surface of the end pieces and cooperates with a retaining device, which retaining device and retaining structure preferably interengage slackly.

It, is not necessary to apply a radial clamping force to the end pieces. The term "slackly" means that an interspace is present between the retaining device and the retaining structure, such that movement of the filter cartridge is made possible at least in the lengthwise or axial direction of the filter housing. Slackness (play) can be provided in the radial and/or axial direction in order to compensate for movement and/or geometrical changes of the filter cartridge due to thermal influences. Thus, unlike the embodiments of the prior art, substantially form-determined retaining means are provided which permit restricted mobility of the filter cartridge in at least one direction as caused, for example, by changes in length resulting from thermal influences. The retaining device secures the cartridge and exerts its retaining function only when the retaining device bears against the retaining structure due to displacement or to a change in length of the cartridge.

Manufacture of the inventive filtering device is cheap because the filter cartridge does not require a separate housing and the material used for the retaining device and that used for the casting material are freely selectable. For example, parts of plastics material can be used for the retaining device.

Another advantage is that the casting material (also called hereinafter: sealing compound) need not be modified for adaptation of the coefficients of thermal expansion and, in particular, requires no modification with fillers impairing the strength properties of the sealing compound.

Radial play is important when the sealing compound itself undergoes strong material expansion relatively to the housing. Axial mobility of the filter cartridge should be permissible with regard to increases in length of the filter elements. The design of the filter and the materials used for the filtering device dictate whether both radial and axial mobility should be allowed for by the retaining device and the retaining structure.

Axial movement may be permitted in both axial directions or in only one axial direction, this depending on the arrangement of the sealing elements. Thus according to one embodiment, for example, at least one sealing element can be disposed on the peripheral surface of the sealing compound (end piece) on each side of the retaining structure. The sealing elements used may be sealing rings, particularly O-rings. In this embodiment, axial displacement of the filter cartridge does not impair the seal provided by the sealing elements so that axial shifts in both axial directions are permissible.

The dimensions of the retaining structures and retaining devices can be such that, following installation thereof, an interspace is made available at each end of, and adjacent to, the retaining device, which interspace can be utilized for compensating changes in length. Restriction of the increase in length may be necessary to prevent the sealing elements from slipping off and the seal between the parts from becoming untight.

According to another embodiment, a sealing element can be disposed on the end face of the filter cartridge. The sealing element is disposed in this case between the sealing compound and the filter head and is compressed during installation so that a sealing closure is provided from the outset. Elongation of the cartridge is permissible in this case, since this manifests itself only by further compression of the sealing element. The arrangement and size of the retaining structures and retaining devices must in this case be such as to substantially exclude a contraction in length, which would lead to the exposure of the end face sealing element. This means that in this embodiment an interspace is provided between the retaining device and retaining structure at one end only.

The retaining devices may also be disposed between the filter head and a sealing ring carrier having at least one sealing element bearing against the sealing compound of the end pieces.

A second sealing element can be disposed in a sealing ring carrier, this bearing against a housing part.

In both cases there is disposed at least one sealing element between the sealing compound and the housing.

A suitable retaining structure and retaining device is, for example, a retaining ring divided in ring segments and an annular groove, respectively. On account of the permissible play, no very high demands on the precision of the groove need be satisfied, as is the case with sealing grooves. In this case it is an advantage when the annular groove exhibits a trapeziform cross-section, in which case the divided retaining ring should also exhibit a trapeziform cross-section so that, on the one hand, assembly of the parts is facilitated and, on the other hand, centering of the filter cartridge is possible. Such a divided retaining ring can, for example, be jammed in between the filter head and filter cartridge housing.

The retaining ring can preferably be produced from plastics material, eg, by injection molding. Such injection moldings are cheaper than metal rings, particularly when the parts of the ring preferably exhibit means for snapping together, which facilitates assembly.

The flanks of the groove should be formed in such a manner that they can absorb high axial forces. The base of the groove can be of any desired shape.

Additional structures in, say, the groove or the retaining device can serve as anti-twist stops.

In addition, further retaining structures can be disposed on the retaining ring, which engage corresponding structures on the filter housing.

According to another embodiment, the retaining device can comprise retaining bolts and the retaining structure radial blind holes provided in the sealing compound of the end pieces. In order to allow for axial movement of the filter cartridge, the diameters of the blind holes are greater than the outside diameters of the retaining bolts.

Another embodiment provides hooks for the retaining device and bayonet closing structures for the retaining structures, which engage said hooks.

Another possibility comprises screw-threaded structures, the retaining device having a female thread and the retaining structures a male thread, which engages the female thread. The female thread can be provided, for example, in the filter head or in the filter housing forming the retaining device. The female and male threads may be interchanged, if desired.

The replaceable filter cartridge preferably used comprises a filter element, particularly in the form of a bundle of capillary or hollow fiber membranes, the filter element being fixed at both ends of the cartridge in end pieces , wherein the filter element fixed in said end pieces defines a flow path for a fluid extending from one end of the cartridge to the other. The end pieces are made of a casting material in which said end portions of the filter elements are embedded; the outer surface of the end pieces formed of the casting material comprises a retaining structure formed thereon, said retaining structure being located at a portion of the end pieces which is sealable against a volume of the filter housing which is in fluid connection with the non-filtrate inlet and which is further sealable against a volume of the filter housing which is in fluid connection with the filtrate outlet by a first and a second sealing element, respectively.

Preferably, the filter cartridge has a retaining structure integrally formed on the sealing compound end pieces.

Such a replaceable filter cartridge may be manufactured as follows:
- providing at least one filter element having two end portions;
- providing a mould for forming end pieces of the filter cartridge accommodating one off the end portions of the filter element;
- positioning the filter element with one end portion extending into said mould;
- feeding a casting material into said mould to form a first end piece of the filter cartridge accommodating one of the end portions of the filter element;
- releasing the first end piece from the mould,
- positioning the filter element with its other end portion extending into said mould;
- feeding a casting material into said mould to form a second end piece to accommodate the other end portion of the filter element;
- releasing the second end piece from the mould;
- removing face portions of the first and the second end pieces such as to provide open end portions of the filter element accessible from each face of the first and second end piece and providing a flow path for a fluid extending from one end portion of the cartridge to the other;
wherein the mould used for forming the end pieces comprises a unitary cap closed at one end, a divided ring and a unitary cylindrical insert; said cap comprising in its interior a cylindrical wall portion adjacent to the closed end of the cap for forming a first sealing surface on the exterior of the end piece, a first recess to accommodate said divided ring and a second recess to accommodate said unitary insert, said divided ring being positioned in between said cylindrical wall portion and said cylindrical insert and having a structure that radially projects inwards from said cylindrical wall portion to form a recessed retaining structure on the exterior of said end piece, and said cylindrical insert having an inner cylindrical wall which is coextensive with said cylindrical wall portion of said cap for forming a second sealing surface on the exterior of said end piece.

Both end portions of the filter element may be positioned simultaneously to extend into the moulds for forming the respective end pieces of the filter cartridge or only one mould may be used to sequentionally cast the end pieces of the cartridge.

First of all the end portions of the filter element are embedded in the casting , material (sealing compound). When the face sections of the end pieces are removed, preferably cut off, the end portions of the filter element are openly accessible at the end piece faces and the filter element then provides a fluid-flow path from one end piece to the other.

Because of this, the filter element need not be positioned very precisely in lengthwise direction with their end portions in the mould cavity which facilitates production of the end pieces.

Because of the unitary structure of the cap and the cylindrical insert, perfect sealing surfaces are obtained on either side of the retaining structure of the end pieces without having the need of finishing such surfaces after release of the end pieces from the mould.

The retaining structure surface quality is not critical since the surface does not have a sealing function. The surface marks resulting from the use of a divided ring in the area of the retaining structure are very well tolerable.

Exemplary embodiments of the invention are illustrated below with reference to the drawings.

In the drawing:
- Fig. 1: is a longitudinal cross-section through a filtering device according to a first embodiment;
- Fig. 2: is a longitudinal cross-section through a filtering device in the region of a filter head according to another embodiment;
- Fig. 3: is a side view of one end of a filter cartridge as shown in Figures 1 and 2;
- Fig. 4: is a side view of one end of a filter cartridge according to another embodiment;
- Fig. 5: is a side view of one end of a filter cartridge according to another embodiment;

- Fig. 6: is a side view of one end of a filter cartridge according to another embodiment;
- Fig. 7: is a longitudinal cross-section through the mould for the production of the sealing compound of a filter cartridge;
- Fig. 8: is a longitudinal cross-section through a filtering device in the region of a filter head according to another embodiment;
- Fig. 9: is a longitudinal cross-section through a filtering device in the region of a filter head according to another embodiment;
- Fig. 10: is a longitudinal cross-section through a filtering device in the region of a filter head according to another embodiment;
- Fig. 11: is a top end view of a face of a specific embodiment of an inventive filter cartridge; and
- Fig. 12: is a top end view of a face of another specific embodiment of an inventive filter cartridge.

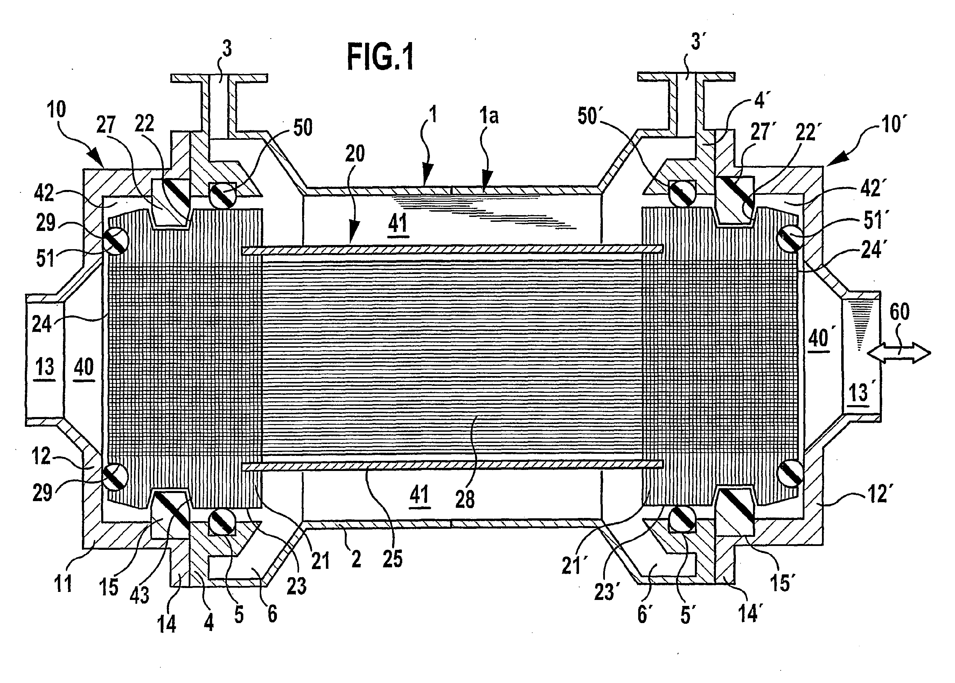

Fig. 1 shows a filtering device having a cylindrical filter housing 1 in which a filter cartridge 20 is disposed. The filter cartridge 20 comprises a filter element in the form of a bundle 28 of capillary or hollow fiber membranes, which is embedded at both ends in a sealing compound forming end pieces 21, 21'. Between the two end pieces 21, 21' the bundle 28 is surrounded by a net 25 as protection during transportation, this net 25 also being embedded in the sealing compound of end pieces 21, 21'. The end pieces have on their peripheral surfaces a sealing face 23, 23', against which an O-ring 50, 50' bears which is locked in position in a groove 5, 5' of the filter housing 1. Furthermore, the filter housing 1 possesses annular outflow channels 6, 6' and two filtrate outlets 3, 3'. The filtrate chamber 41 is disposed between the filter cartridge 20 and the housing wall 2.

The filter housing 1 comprises a filter cartridge housing 1a the faces of which are formed by annular securing flanges 4, 4', against which filter heads 10, 10' bear with their securing flanges 14, 14', where they are connected to the filter cartridge housing 1a. The securing flange 14, 14' is moulded on to a collar 11, 11', which is connected to the non-filtrate inlet 13, 13' via the head wall 12, 12', which is at right angles to the longitudinal axis of the filtering device. The faces 24, 24' of the filter cartridge 20 are associated with the non-filtrate inlets 13, 13' so that the space in front to the end faces 24, 24' forms in each case the non-filtrate chamber 40, 40'.

The filter head 10, 10' possesses an annular recess 15, 15' in which a split retaining ring 27, 27' can be fitted in between the filter head 10, 10' and the filter cartridge housing 1. This retaining ring 27, 27' engages a retaining structure in the form of a groove 22, 22' in the peripheral surface of the end piece 21,21' by which ,means the filter cartridge 20 is secured.

The groove 22, 22' possesses a trapeziform cross-section corresponding to the trapeziform cross-section of the retaining ring 27, 27'. The width and depth of the groove 22, 22' are slightly greater than the width of the trapeziform inside contour of the retaining ring so that an interspace 43 (shown on an enlarged scale) is formed, which allows for radial expansion and axial displacement of the filter cartridge in the direction of the arrows 60 if the dimensions of the filter cartridge 20 should change on account of temperature variations. Preferably, an interspace 43 is disposed on the side of the retaining ring 27, 27' remote from the end face 24, 24', while on the opposite side the retaining ring 27, 27' bears against the sidewall of the groove 22, 22'. This ensures that the O-ring 51 situated on the end face always sealingly bears against the head wall 12, 12'.

The wedge-shaped surfaces of the groove 22, 22' and of the retaining ring 27, 27' allow for simple assembly and alignment of the filter cartridge 20.

In the end face 24, 24' of the end piece 21, 21', there is provided another groove 29, 29' having an O-ring 51, 51' which presses against the head wall 12, 12' when installed.

The retaining ring 27, 27' is thus encased and is disposed in an annular securing chamber 42, 42' which is sealed off from both the filtrate chamber 41 and the non-filtrate chamber 40, 40'. This prevents the retaining ring 27, 27' from contaminating the filtrate.

The arrangement of groove 22, 22' and retaining ring 27, 27' is such that the O-ring 51, 51' is kept under pressure and thus sealingly bears against the head wall. Even in the case of axial displacement of the filter cartridge the seal holds and the O-ring 51, 51' is at most additionally compressed.

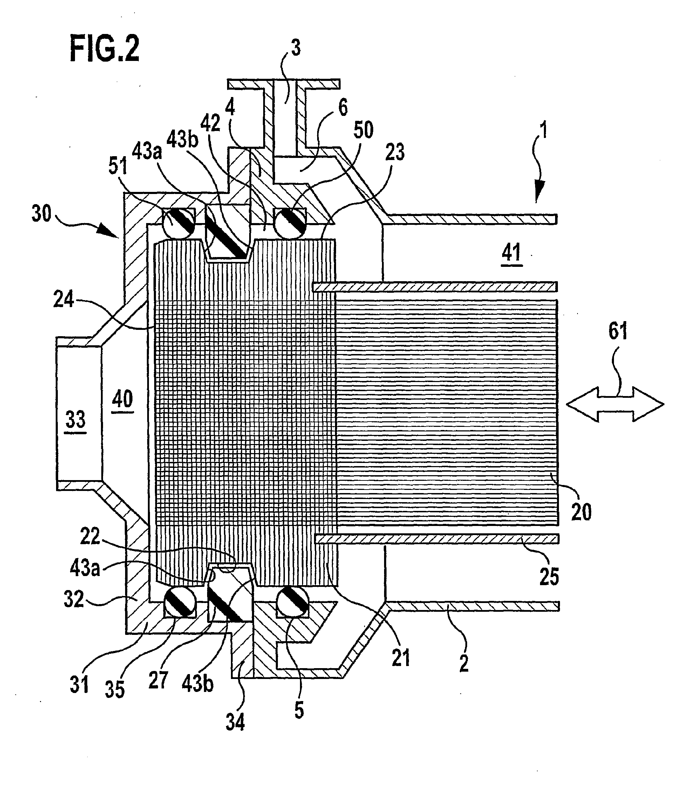

Fig. 2 illustrates another embodiment, which differs from the embodiment shown in Fig. 1 in that both O-rings 50 and 51 bear against the peripheral surface 23 of the sealing compound of end piece 21. The collar 31 of the filter head 30, which exhibits a head wall 32, a non-filtrate inlet 33, and a securing flange 34, accordingly possesses an annular groove 35 to accommodate the second O-ring 51. In this embodiment also, the retaining ring 27 is encased and sealed off and contacts neither the non-filtrate nor the filtrate.

Since both O-rings 50 and 51 are disposed on the peripheral surface 23, the width of the groove 22 and the arrangement of the retaining ring 27 can be such that on both sides of the retaining ring 27 an interspace 43a, b, is formed which allows for displacement of the filter cartridge in both directions, as indicated by the arrows 61.

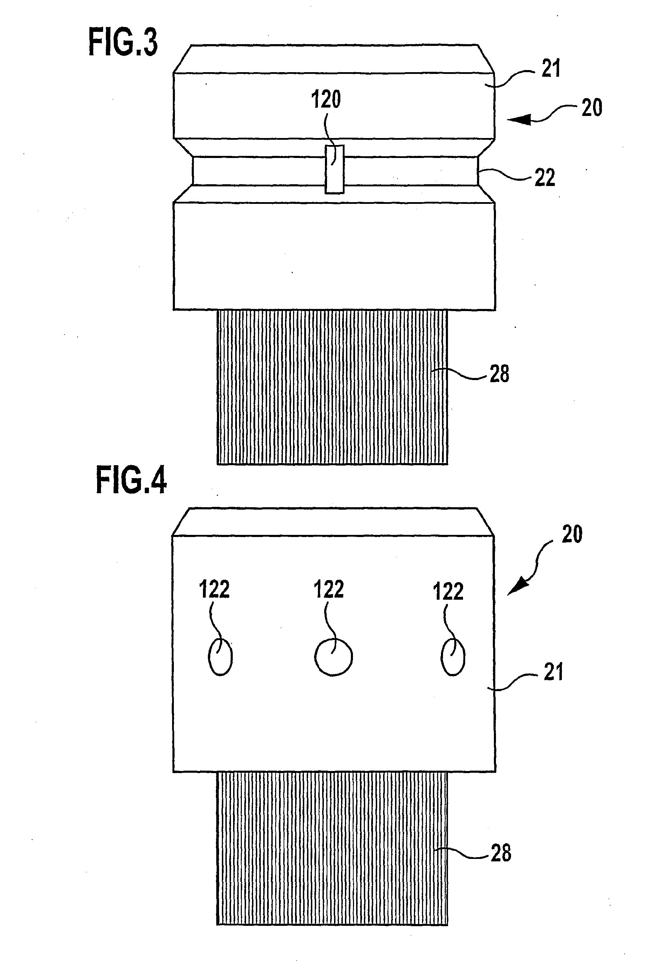

Fig. 3 is a partial side view of the filter cartridges shown in Figures 1 and 2. The groove 22 can show a bulged portion 120, which extends in the axial direction and acts as an anti-twist stop. The axial displaceability of the filter cartridge 20 is not hindered by this means. It merely prevents twisting or turning of the filter cartridge during operation.

Fig. 4 illustrates another embodiment, in which the retaining structure consists of blind holes 122 distributed around the periphery of the sealing compound 21. These blind holes 122 are engaged by pins or bolts, which can be removeably secured between the end pieces 21, 21' and the filter housing 1 like the retaining ring 27.

In order to guarantee axial mobility of the filter cartridge 20 as such, the diameter of the blind bores 122 can be greater than the diameter of the pins engaging said blind bores 122.

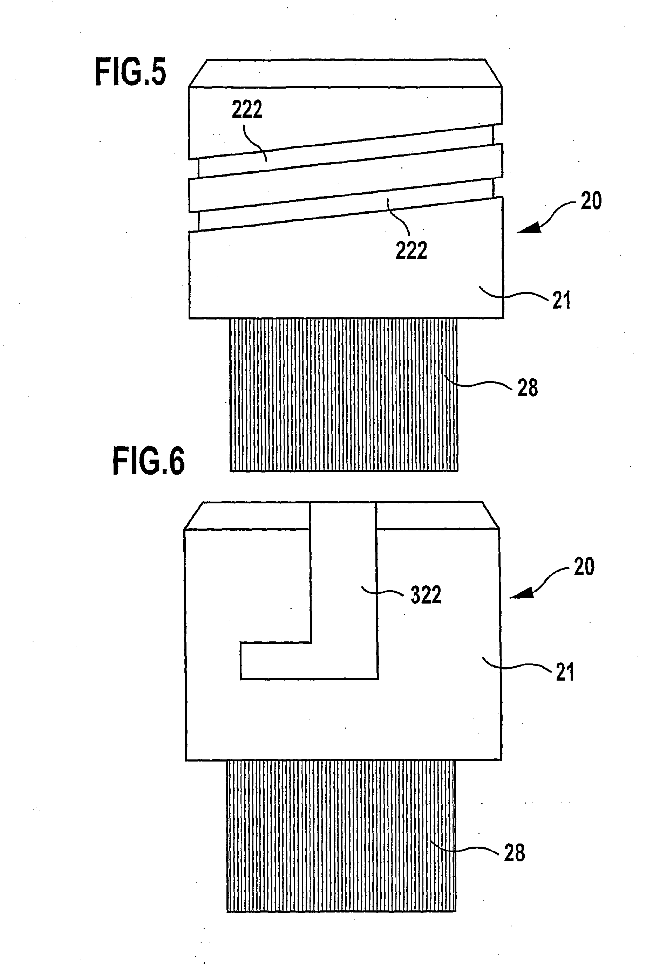

Fig. 5 illustrates another embodiment, in which the retaining structure is in the form of a male thread 222. In this case either the filter cartridge housing or the filter head has a corresponding female thread so that the filter cartridge can be screwed in. In this embodiment also, provision can be made for the width of the grooves in the male thread 222 to be greater than the corresponding threads in the filter housing or in the filter head so that axial mobility of the filter cartridge 20 is ensured.

Fig. 6 illustrates another embodiment, which exhibits bayonet-like structures 322 as retaining structures.

In this embodiment also, corresponding structures are provided in the filter cartridge housing or in the filter head or filter heads, which structures engage the bayonet-like structure.

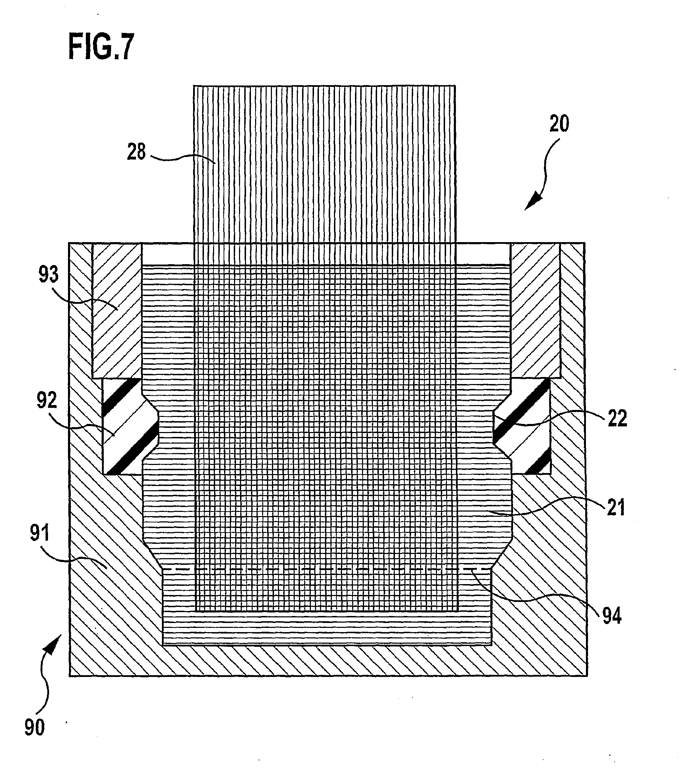

Figure 7 is a longitudinal cross-section through a mould 90 for the production of the end piece 21. The mould 90 comprises a unitary cap 91, a divided retainer ring 92, and a cylindrical insert 93. The axially symmetrical inner wall portion adjacent the closed end of the cap 91 and the axially symmetrical cylindrical insert 93 form the surfaces of the end piece 21 serving as sealing surfaces for the seals. Mold release is carried out in the axial direction, while the divided retainer ring 92 is removed radially from the moulded end piece.

After removal of the end piece 21 from the mould 90 a face portion is cut off along the broken line 94. The end portions of the filter element (bundle 28 of capillary fibers) are now accessible at each face of the end pieces 21, 21' and provide a flow path for a fluid extending from one end portion of the cartridge to the other.

While Fig. 7 shows a divided ring, from the retaining structure of the end piece as shown in Fig. 1 and 2, it is easily conceivable that other types of structures of the divided ring that radically projects inwards from the cylindrical wall portion of cap 91 will give rise to retaining structures as shown in Fig. 3 to 6.

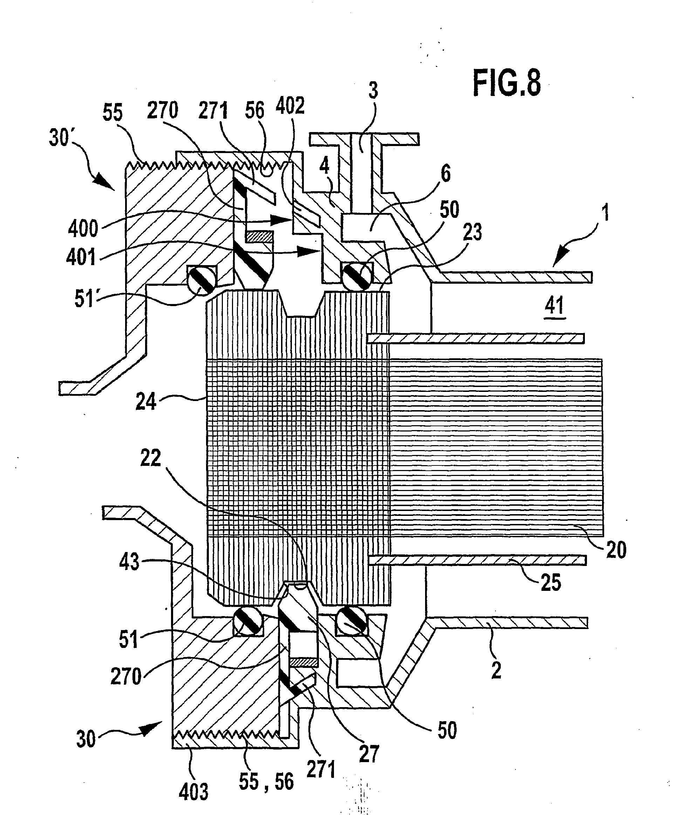

Figure 8 illustrates another embodiment, which exhibits a modified head 30' having, on its external surface, a male thread 55 which cooperates with a female thread 56 in the cartridge housing 2. The securing flange 4 possesses two steps 400, 401 and an annular wall 403 provided with the female thread 56. In the step there is disposed an inwardly extending annular slanted groove 402.

The retaining ring 27 is extended radially outwardly in the form of a fin 270, at the outer end of which slanted fins 271 are disposed, these being distributed around the entire periphery of said ring.

When the head 30' is screwed on, the retaining ring 27 moves toward the slanted groove 402 such that the fins 271 engage the slanted groove 402. This leads to arrestment of the retaining ring 27. When the head 30' is removed, the divided retaining ring 27 is drawn back. Due to the fins 271 cooperating with the groove 402, axial motion of the head 30' is transformed to radial motion of the parts of the retainer ring 27.

The upper half of Figure 8 shows the arrangement when head 30' is partially screwed off. The lower half shows the locked filter cartridge with head 30' screwed on. Instead of a screw construction there may be provided a flange-like connection comprising stay bolts and nuts.

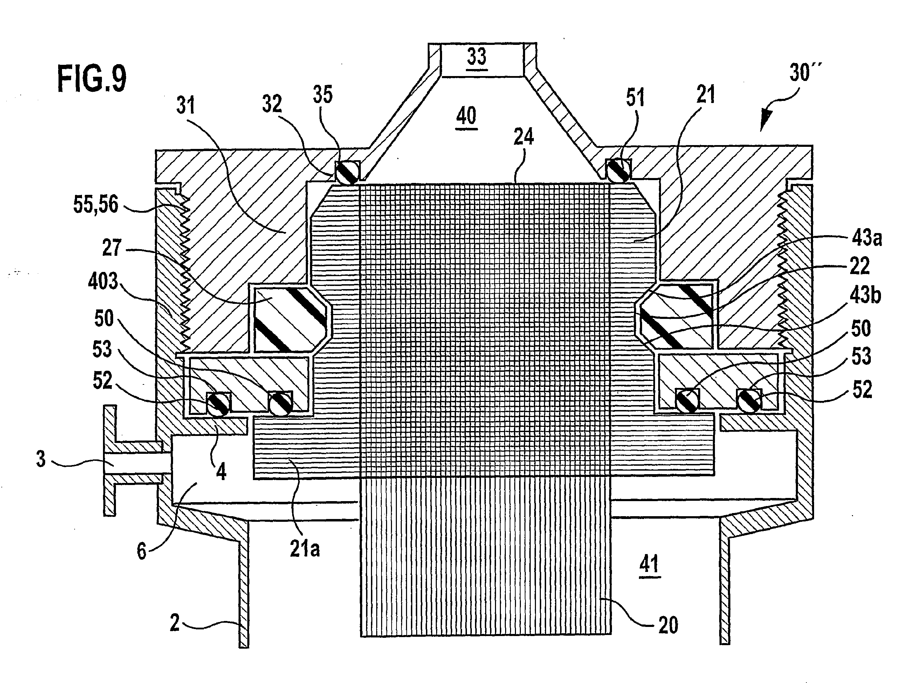

Figure 9 illustrates another embodiment, which exhibits a head 30", which, together with an annular groove 53, makes it possible for all of the O-rings 50, 51, and 52 to be disposed in the axial direction and to be compressed in the axial direction.

The end piece 21 possesses a radial projection 21a at its end remote from face 24. This projection 21a extends right up to the securing flange 4 of the housing and forms a bearing surface for the sealing ring 50. Like the sealing ring 52, the sealing ring 50 is disposed in a sealing ring carrier 53, whose two grooves are annular, the inner groove being opposite to projection 21a and the outer groove being opposite to flange 4. This sealing ring carrier 53 is installed between the projection 21a or the flange 4 and the filter head 30" or the retaining ring 27, respectively. In this embodiment also, the head 30" possesses a male thread and the filter housing has a wall 403 having a female thread so that the head 30" can be screwed into position. This embodiment possesses advantages for setting-up, since the cartridge need not be pushed out under high expenditure of energy. The energy requirements are in this respect less than in the case of the embodiment shown in Figure 2.

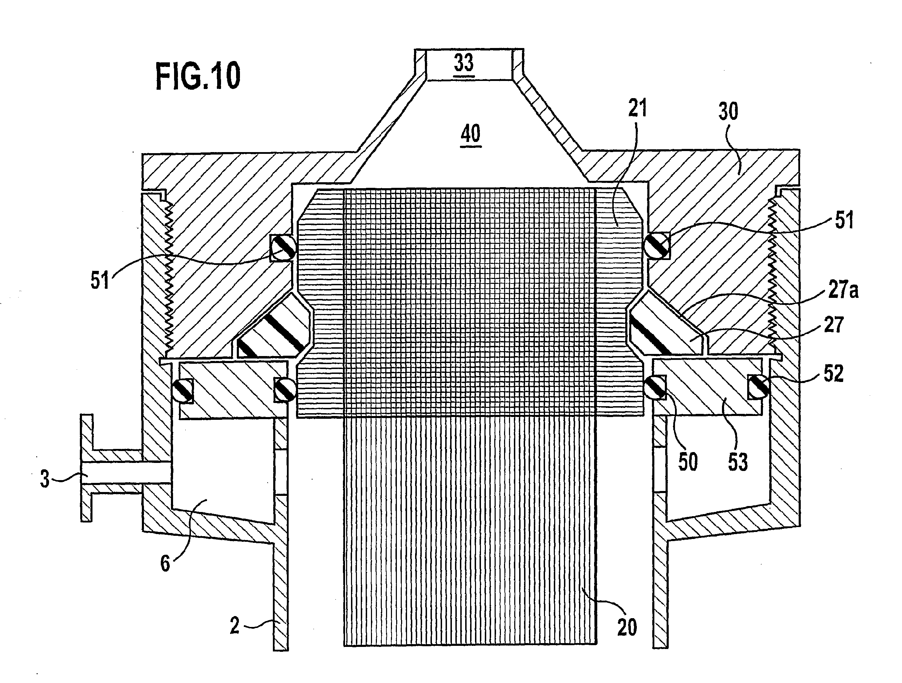

Figure 10 illustrates another embodiment, which exhibits a modified sealing ring carrier 53 and retaining ring 27. The sealing ring carrier 53 carries, on its inner surface, the sealing ring 50 and, on its external surface, the sealing ring 52, and closes the annular filtrate channel 6. The retaining ring 27 possesses an inclined surface 27a so that when the filter head is screwed on, the retaining ring 27 is pressed against the sealing ring carrier 53 and is compressed against the housing. During assembly, the slide-in cartridge is simultaneously pushed into its optimum position.

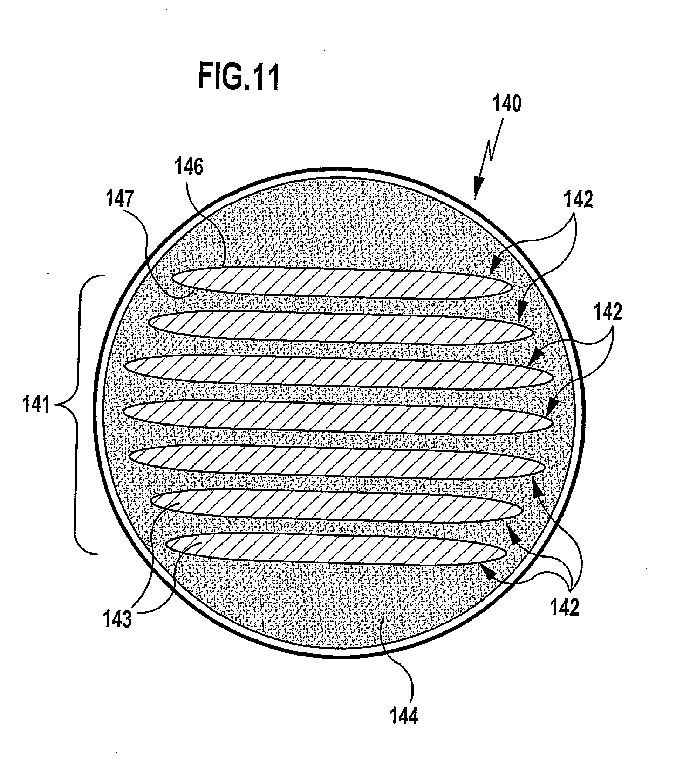

Fig. 11 shows a front view of the front face of an end piece 140 of a filter cartridge which includes a plurality of flat tubular membranes 142 arranged in parallel to one another which form the filter element 141. The width of the flat tubular membranes 142 varies so as to make maximum use of the width of the end piece, maximizing the membrane surface area of the filter element. In order to keep the coextensive walls 146, 147 of a flat tubular membrane 142 apart from one another a spacer 143 in sheet form is inserted in each of the membranes 142. The spacer 143 prevents the tubular membrane 142 from collapsing which would make the individual memrane 142 inoperative but does not hinder fluid flow in the lengthwise direction of the tubular membrane 142.

The tubular membranes 142 are sealingly embedded in a casting material 144 made of a sealing compound which forms the end piece 140 and are kept at a predefined distance from each other.

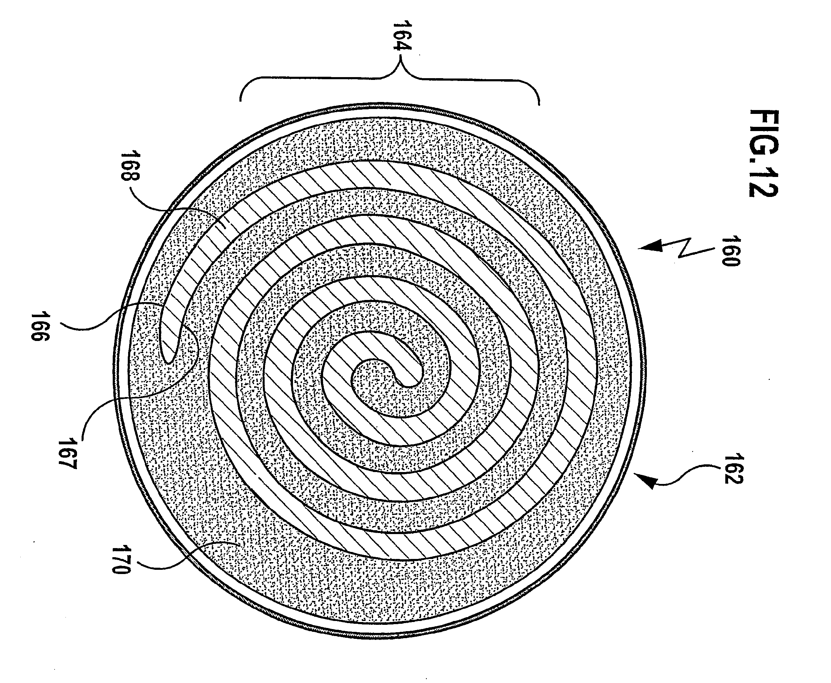

Fig. 12 again shows a front view of the front face of an end piece 160 of a filter cartridge which comprises a flat tubular membrane 162 which forms a filter element 164. The flat tubular membrane 162 is spirally wound around a longitudinal axis while the windings of the tubular membrane 162 are kept at a certain distance from one another. The coextensive walls 166, 167 of the flat tubular membrane 162 are kept apart from each other by a spacer sheet 168. The end portion of filter element 164 is embedded in a casting material 170 fixing the windings of the flat tubular membrane 162 at a predefined distance.

It is easily conceivable that not only one flat tubular membrane may be used in this type of filter element but two or more flat tubular membranes may be used and spirally wound around a longitudinal axis.

When embedding the end portions of these filter elements 141 and 164 in the casting material 144 and 170, respectively, the tubular membranes or their windings may be kept apart from each other by spacer elements which are also embedded in the casting material (not shown in Fig. 11 and 12) and which have no more function once the end portion of the filter element 141 and 164 is fixedly held by the casting material 144 and 170, respectively.

The sealing surfaces and the retaining structure can be selected independently of the type of filter element used and therefore any of the embodiments of Fig. 1 to 6 and 8 to 10 may be used in connection with the specific filter elements used in Fig. 11 and 12.

### Reference numerals:

- 1: filter housing
- 1a: filter cartridge housing
- 2: housing wall
- 3, 3': filtrate outlet
- 4, 4': securing flange
- 5, 5': annular groove
- 6, 6': annular filtrate channel
- 10: filter head
- 10': filter head
- 11,11': collar
- 12,12': head wall
- 13, 13': non-filtrate inlet
- 14, 14': securing flange
- 15, 15': annular recess
- 20: filter cartridge
- 21, 21': sealing compound
- 21a: radial projection
- 22, 22': groove
- 23, 23': peripheral surface
- 24, 24': end face
- 25: net
- 27, 27': retaining ring
- 27a: inclined surface
- 28: bundle of capillary and hollow fiber membranes
- 29, 29': groove
- 30, 30': filter head
- 31: collar
- 32: head wall
- 33: non-filtrate inlet
- 34: securing flange
- 35: annular groove
- 40, 40': non-filtrate chamber
- 41: filtrate chamber
- 42, 42': annular securing chamber
- 43: interspace
- 43a, 43b: interspace
- 60, 50': O-ring, sealing element
- 51, 51': O-ring, sealing element
- 52: O-ring
- 53: sealing ring carrier
- 55: male thread
- 56: female thread
- 60: direction of arrow
- 61: direction of arrow
- 90: mold
- 91: cap
- 92: divided retainer ring
- 93: cylindrical insert
- 94: broken line
- 140: end piece
- 141: filter element
- 142: membrane
- 143: spacer
- 144: casting material
- 146, 147: membrane walls
- 160: end piece
- 162: membrane
- 164: filter element
- 166, 167: membrane walls
- 168: spacer sheet
- 170: casting material
- 120: bulged portion
- 122: blind hole
- 222: male thread
- 270: fin
- 271: fin
- 322: bayonet closing structure
- 400: step
- 401: step
- 402: slanted groove
- 403: wall

## Claims

1. A filtering device comprising
- a filter housing (1) having at least one non-filtrate inlet (13) and at least one filtrate outlet (3, 3'),
- a replaceable filter cartridge (20) inserted in said filter housing (1) and containing at least one filter element which is fixed at both ends of the cartridge In end pieces (21, 21'), wherein the filter element fixed in said end pieces defines a flow path for a fluid extending from one end of the cartridge to the other; and
- at least one retaining device for supporting the filter cartridge (20) in the filter housing (1) which indirectly or directly bears against the filter housing (1) in the axial direction,
- wherein the end pieces (21, 21') are made of a casting material in which end portions of the filter element are embedded, wherein the outer surface of the end pieces (21, 21') formed of the casting material comprises a retaining structure formed thereon to cooperates with said retraining device, said retaining structure being located at a portion of the end pieces (21, 21') which is sealed against a volume of the filter housing which is in fluid connection with the non-flitrate inlet and which is further sealed against a volume of the filter housing which is in fluid connection with the filtrate outlet by a first and a second sealing element, respectively.

2. The filtering device as defined in claim 1, wherein the filter element comprises a bundle (28) of capillary or hollow fiber membranes.
**characterised in** than the retaining device and the retaining structure are designed to interengage slackly to thereby allow a movement of the filter cartridge relative to the filter housing in the radial and/or axial direction thereof.

3. The filtering device of claim, 1 or 2, wherein the filter housing comprises a filter cartridge housing having a first and a second open end and further comprises a detachable filter head at each open end and wherein the retaining device is retained in between the filter head and the filter cartridge housing.

4. The filtering device as defined in claim 3, wherein the retaining device is jammed between said filter cartridge housing and said filter head (10, 10').

5. The filtering device as defined in any one of claims 1 to 4, wherein at least one of the seating elements is in the form of a grooved ring accommodating at least one seating ring.

6. The filtering device as defined in any one of claims 1 to 5, wherein said retaining device is a retaining ring (27, 27') divided in a multiplicity of ring segments and wherein said retaining structure is an annular groove (22) engaged by said retaining ring (27, 27').

7. The filtering device as defined in claim 6, wherein the annular groove (22) has a trapeziform cross-section.

8. The filtering device as defined in any one of claims 1 to 5, wherein said retaining device comprises retaining bolts and said retaining structure consists of radial blind holes (122) which are engaged by said bolts.

9. The filtering device as defined in any one of claims 1 to 5, wherein said retaining device comprises hooks and said retaining structure is in the form of bayonet closing structures (322) to be engaged by said hooks.

10. The filtering device as defined in any one of claims 1 to 5, wherein said retaining device comprise a female or male thread (55, 56, 222) and said retaining structure consists of a complementary thread.

11. The filtering device as defined in claim 6, wherein the retaining ring (27, 27') exhibits fixing structures (271) which cooperate with complementary structures on the filter cartridge housing (1).

12. The filtering device as defined in any one of claims 1 to 11, wherein at least one sealing element (51, 51') is disposed on the end face (24) of the end pieces (21, 21').

13. The filtering device as defined in claim 5 and 12, wherein said end pieces (21, 21') having a projection (21a) radially extending from the circumference of the end pieces and wherein the grooved ring (53) abuts against said projection (21a).

14. The filtering device as defined in any one of claims 1 to 13, wherein at least one sealing element (50, 50') is disposed between said end pieces (21, 21') and the filter cartridge housing and wherein at least one sealing element (51) is disposed between the end piece (21) and the filter head (10,10').

## Patentansprüche

1. Filtervorrichtung, umfassend
- ein Filtergehäuse (1) mit wenigstens einem Unfiltrateinlass (13) und wenigstens einem Filtratauslass (3, 3'),
- eine austauschbare Filterpatrone (20), welche in das Filtergehäuse (1) eingesetzt ist und wenigstens ein Filterelement enthält, welches an beiden Enden der Patrone in Endstücken (21, 21') fixiert ist, wobei das in den Endstücken fixierte Filterelement einen Strömungspfad für ein Fluid definiert, der sich von einem Ende der Patrone zum anderen erstreckt; und
- mindestens eine Haltevorrichtung zur Stützung der Filterpatrone (20) in dem Filtergehäuse (1), welche indirekt oder direkt gegen das Filtergehäuse (1) in axialer Richtung anliegt,
- wobei die Endstücke (21, 21') aus einer Gießmasse hergestellt sind, in der Endbereiche des Filterelementes eingebettet sind, wobei die Außenfläche der von der Gießmasse gebildeten Endstücke (21, 21') eine daran geformte Haltestruktur zum Zusammenwirken mit der Haltevorrichtung aufweist, wobei die Haltestruktur in einem Bereich der Endstücke (21, 21') angeordnet ist, der gegen ein Volumen des Filtergehäuses, welches in Fluidverbindung mit dem Unfiltrateinlass steht, abgedichtet ist, und ferner gegen ein Volumen des Filtergehäuses, welches in Fluidverbindung mit dem Filtratauslass steht, abgedichtet ist, und zwar mittels eines ersten bzw. zweiten Dichtelementes, **dadurch gekennzeichnet, dass** die Haltevorrichtung und die Haltestruktur so ausgebildet sind, dass sie mit Spiel ineinandergreifen, um **dadurch** eine Bewegung der Filterpatrone relativ zu dem Filtergehäuse in der radialen und/oder axialen Richtung desselben zuzulassen.

2. Filtervorrichtung nach Anspruch 1, wobei das Filterelement ein Bündel (28) von Kapillar- oder Hohlfasermembranen umfasst.

3. Filtervorrichtung nach Anspruch 1 oder 2, wobei das Filtergehäuse ein Filterpatronengehäuse umfasst, welches ein erstes und ein zweites offenes Ende aufweist, und ferner einen entfernbaren Filterkopf an jedem offenen Ende umfasst, und wobei die Haltevorrichtung zwischen dem Filterkopf und dem Filterpatronengehäuse gehalten ist.

4. Filtervorrichtung nach Anspruch 3, wobei die Haltevorrichtung zwischen Filterpatronengehäuse und Filterkopf (10, 10') geklemmt ist.

5. Filtervorrichtung nach einem der Ansprüche 1 bis 4, wobei wenigstens eines der Dichtelemente als Nutenring ausgebildet ist, welcher wenigstens einen Dichtring aufnimmt.

6. Filtervorrichtung nach einem der Ansprüche 1 bis 5, wobei die Haltevorrichtung ein Haltering (27, 27') ist, welcher in eine Mehrzahl von Ringsegmente aufgeteilt ist, und wobei die Haltestruktur eine ringförmige Nut (22) ist, in die der Haltering (27, 27') eingreift.

7. Filtervorrichtung nach Anspruch 6, wobei die ringförmige Nut (22) einen trapezförmigen Querschnitt aufweist.

8. Filtervorrichtung nach einem der Ansprüche 1 bis 5, wobei die Haltevorrichtung Haltebolzen umfasst und wobei die Haltestruktur von radialen Blindlöchern (122) gebildet ist, in die die Bolzen eingreifen.

9. Filtervorrichtung nach einem der Ansprüche 1 bis 5, wobei die Haltevorrichtung Haken umfasst und wobei die Haltestruktur als Bajonettverschlussstrukturen (322) ausgebildet ist, in die die Haken eingreifen.

10. Filtervorrichtung nach einem der Ansprüche 1 bis 5, wobei die Haltevorrichtung ein Innen- oder ein Außengewinde (55, 56, 222) umfasst und wobei die Haltestruktur von einem komplementären Gewinde gebildet ist.

11. Filtervorrichtung nach Anspruch 6, wobei der Haltering (27, 27') Fixierstrukturen (271) aufweist, welche mit komplementären Strukturen am Filterpatronengehäuse (1) zusammenwirken.

12. Filtervorrichtung nach einem der Ansprüche 1 bis 11, wobei wenigstens ein Dichtelement (51, 51') an der Endfläche (24) der Endstücke (21, 21') angeordnet ist.

13. Filtervorrichtung nach Anspruch 5 und Anspruch 12, wobei die Endstücke (21, 21') einen sich vom Umfang der Endstücke radial erstreckenden Vorsprung (21a) aufweisen und wobei der Nutenring (53) an den Vorsprung (21a) angrenzt.

14. Filtervorrichtung nach einem der Ansprüche 1 bis 13, wobei wenigstens ein Dichtelement (50, 50') zwischen den Endstücken (21, 21') und dem Filterpatronengehäuse angeordnet ist und wobei wenigstens ein Dichtelement (51) zwischen dem Endstück (21) und dem Filterkopf (10, 10') angeordnet ist.

## Revendications

1. Dispositif de filtration comprenant :
un boîtier de filtre (1) ayant au moins une entrée de produit non filtré (13) et au moins une sortie de produit filtré (3, 3'),
une cartouche de filtre remplaçable (20) insérée dans ledit boîtier de filtre (1) et contenant au moins un élément de filtre qui est fixé aux deux extrémités de la cartouche dans des pièces d'extrémité (21, 21'), dans lequel l'élément de filtre fixé dans lesdites pièces d'extrémité définit une trajectoire d'écoulement pour un fluide s'étendant d'une extrémité de la cartouche à l'autre ; et
au moins un dispositif de retenue pour supporter la cartouche de filtre (20) dans le boîtier de filtre (1) qui s'appuie indirectement ou directement contre le boîtier de filtre (1) dans la direction axiale,
dans lequel les pièces d'extrémité (21, 21') sont réalisées avec un matériau de moulage dans lequel les parties d'extrémité de l'élément de filtre sont encastrées, dans lequel la surface externe des pièces d'extrémité (21, 21') formées dans le matériau de moulage comprend une structure de retenue formée sur celle-ci pour coopérer avec ledit dispositif de retenue, ladite structure de retenue étant située au niveau d'une partie des pièces d'extrémité (21, 21') qui est étanche contre un volume du boîtier de filtre qui est en raccordement de fluide avec l'entrée de produit non filtré et qui est en outre étanche contre un volume du boîtier de filtre qui est en raccordement de fluide avec la sortie de produit filtré par un premier et un second élément d'étanchéité, respectivement, **caractérisé en ce que** le dispositif de retenue et la structure de retenue sont conçus pour se mettre en prise mutuellement avec du jeu pour permettre ainsi un mouvement de la cartouche de filtre par rapport au boîtier de filtre dans sa direction radiale et/ou axiale.

2. Dispositif de filtration selon la revendication 1,
dans lequel l'élément de filtre comprend un groupe (28) de membranes capillaires ou de fibres creuses.

3. Dispositif de filtration selon la revendication 1 ou 2, dans lequel le boîtier de filtre comprend un boîtier de cartouche de filtre ayant une première et une seconde extrémité ouverte et comprend en outre une tête de filtre détachable à chaque extrémité ouverte et dans lequel le dispositif de retenue est retenu entre la tête de filtre et le boîtier de cartouche de filtre.

4. Dispositif de filtration selon la revendication 3,
dans lequel le dispositif de retenue est coincé entre ledit boîtier de cartouche de filtre et ladite tête de filtre (10, 10').

5. Dispositif de filtration selon l'une quelconque des revendications 1 à 4, dans lequel au moins l'un des éléments d'étanchéité se présente sous la forme d'une bague rainurée logeant au moins une bague d'étanchéité.

6. Dispositif de filtration selon l'une quelconque des revendications 1 à 5, dans lequel ledit dispositif de retenue est une bague de retenue (27, 27') divisée en une multiplicité de segments annulaires et dans lequel ladite structure de retenue est une rainure annulaire (22) mise en prise par ladite bague de retenue (27, 27').

7. Dispositif de filtration selon la revendication 6,
dans lequel la rainure annulaire (22) a une section transversale trapézoidale.

8. Dispositif de filtration selon l'une quelconque des revendications 1 à 5, dans lequel ledit dispositif de retenue comprend des boulons de retenue et ladite structure de retenue se compose de trous borgnes radiaux (122) qui sont mis en prise par lesdits boulons.

9. Dispositif de filtration selon l'une quelconque des revendications 1 à 5, dans lequel ledit dispositif de retenue comprend des crochets et ladite structure de retenue se présente sous la forme de structures de fermeture à baïonnette (322) à mettre en prise par lesdits crochets.

10. Dispositif de filtration selon l'une quelconque des revendications 1 à 5, dans lequel ledit dispositif de retenue comprend un filetage femelle ou mâle (55, 56, 222) et ladite structure de retenue se compose d'un filetage complémentaire.

11. Dispositif de filtration selon la revendication 6,
dans lequel la bague de retenue (27, 27') laisse apparaître des structures de fixation (271) qui coopèrent avec des structures complémentaires sur le boîtier de cartouche de filtre (1).

12. Dispositif de filtration selon l'une quelconque des revendications 1 à 11, dans lequel au moins un élément d'étanchéité (51, 51') est disposé sur la face d'extrémité (24) des pièces d'extrémité (21, 21').

13. Dispositif de filtration selon les revendications 5 et 12, dans lequel lesdites pièces d'extrémité (21, 21') ont une saillie (21a) s'étendant de manière radiale à partir de la circonférence des pièces d'extrémité et dans lequel la bague rainurée (53) vient en butée contre ladite saillie (21a).

14. Dispositif de filtration selon l'une quelconque des revendications 1 à 13, dans lequel au moins un élément d'étanchéité (50, 50') est disposé entre lesdites pièces d'extrémité (21, 21') et le boîtier de cartouche de filtre et dans lequel au moins un élément d'étanchéité (51) est disposé entre la pièce d'extrémité (21) et la tête de filtre (10, 10') .
